# EUROPEAN PATENT APPLICATION

(11) **EP 4 343 956 A1**
(43) Date of publication of application: **27.03.2024**
(21) Application number: 23199005.2
(22) Date of filing: 22.09.2023
(51) Int. Cl.: H01M 50/533, H01M 50/579, H01M 50/103, H01M 50/566, H01M 10/052, H01M 50/55, H01M 50/553

(54) **SECONDARY BATTERY**

(30) Priority: 26.09.2022 KR 20220121588
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR)
(74) Representative: Gulde & Partner

(57) **Abstract**

A secondary battery includes: an electrode assembly including a first electrode plate from which a first current collecting tab protrudes, a second electrode plate from which a second current collecting tab protrudes, and a separator between the first electrode plate and the second electrode plate; a case accommodating the electrode assembly; and a current collector plate electrically connected to the first current collecting tab and including protrusions, and the first current collecting tab is vertically coupled to the current collector plate and includes coupling grooves to which the protrusions are coupled.

## Description

### BACKGROUND

### 1. Field

Aspects of embodiments of the present disclosure relate to a secondary battery.

### 2. Description of Related Art

A secondary battery is a power storage system that provides excellent energy density capable of converting electrical energy into chemical energy and storing the same. Compared to non-rechargeable primary batteries, secondary batteries are rechargeable and are widely used in IT devices such as smartphones, cellular phones, notebooks, and tablet PCs. Recently, interest in electric vehicles has increased to prevent or reduce environmental pollution, and, accordingly, high-capacity secondary batteries are being adopted for electric vehicles. These secondary batteries are required to have characteristics such as high density, high power, and stability.

In a secondary battery, internal resistance may vary according to a welding method between a current collector tab and a current collector plate, and, thus, a current flow flowing inside the secondary battery may also be affected.

The above information disclosed in this Background section is provided for enhancement of understanding of the background of the invention and, therefore, it may contain information that does not constitute prior art.

### SUMMARY

It was an object of the present invention to provide a secondary battery which is capable of uniform or substantially uniform welding between a current collector tab and a current collector plate and which is stable against vibration or external shock applied to the secondary battery during welding and thus to prevent or substantially prevent its deformation. It was another object of the present invention to provide a secondary battery in which, by providing a current collecting tab having coupling grooves and a current collector plate having protrusions coupled to the coupling grooves and vertically coupled to the current collecting tab, welding between the current collecting tab and the current collector plate can be made uniform or substantially uniform.

According to the present invention, a secondary battery includes: an electrode assembly including a first electrode plate from which a first current collecting tab protrudes, a second electrode plate from which a second current collecting tab protrudes, and a separator between the first electrode plate and the second electrode plate; a case accommodating the electrode assembly; and a current collector plate electrically connected to the first current collecting tab and including protrusions, wherein the first current collecting tab is vertically coupled to the current collector plate and includes coupling grooves to which the protrusions are coupled.

The current collector plate includes a first region and a second region and the second region is vertically coupled to the first current collecting tab or the second current collecting tab of the electrode assembly.

The first current collecting tab protrudes only to a portion of the side surface of the first electrode plate, such that a top portion or a bottom portion of a first region of the current collector plate is spaced apart from the first electrode plate.

The second current collecting tab protrudes only to a portion of the side surface of the second electrode plate, such that a top portion or a bottom portion of a first region of the current collector plate is spaced apart from the second electrode plate.

The coupling grooves may include a plurality of trenches spaced apart from each other.

The secondary battery may further include an adhesion member between the coupling grooves and fixing the first current collecting tab.

Welding beads may be formed in the protrusions by welding the first current collecting tab and the current collector plate.

The coupling grooves may have a depth of 0.8 mm to 1.2 mm.

A depth of each of the coupling grooves may be 45% to 64% of a protruding length of the first current collecting tab from the first electrode plate.

An interval between the coupling grooves may be 10 mm or more.

The current collector plate may be arranged parallel to a short side surface of the case, and the protrusions may protrude in a direction toward the electrode assembly.

The first current collecting tab may be arranged only on a portion of a side surface of the first electrode plate and may be covered by the current collector plate, and a portion of the first electrode plate on which the first current collecting tab is not arranged may be exposed from the current collector plate and may face the short side surface of the case.

A separation space may be located between the current collector plate and the first electrode plate.

### BRIEF DESCRIPTION OF DRAWINGS

FIG. 1 is a perspective view illustrating a secondary battery according to an embodiment of the present disclosure.
FIG. 2 is an exploded perspective view illustrating a secondary battery according to an embodiment of the present disclosure.
FIG. 3 is a perspective view illustrating a first current collecting tab.
FIG. 4 is a perspective view illustrating a current collector plate.
FIG. 5 is a perspective view illustrating a state in which a first collecting tab and a current collector plate are coupled to each other.

### DETAILED DESCRIPTION

The present invention is set out in the appended set of claims, wherein the drawings and respective description relate to advantageous embodiments thereof. Herein, some example embodiments of the present disclosure will be described in further detail with reference to the accompanying drawings.

Some example embodiments of the present disclosure are provided to more completely explain the present disclosure to those skilled in the art; however, the following examples may be modified in various other forms. That is, the present disclosure may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Some embodiments of the present disclosure will now be described in further detail with reference to the accompanying drawings to the extent that a person skilled in the art to which the present disclosure belongs can easily implement the present disclosure.

Here, the same reference numerals are used in connection with parts having similar configurations and operations throughout the specification. In addition, when a part is said to be electrically coupled to another part, this includes not only a case in which it is directly connected, but also a case in which it is connected with another element interposed therebetween.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

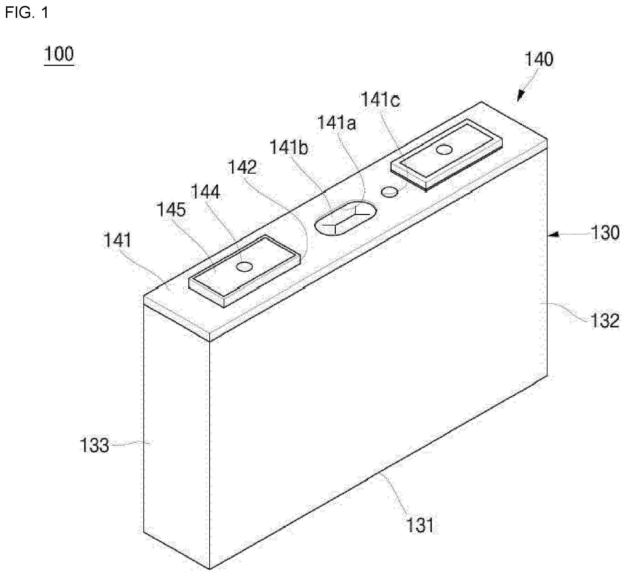

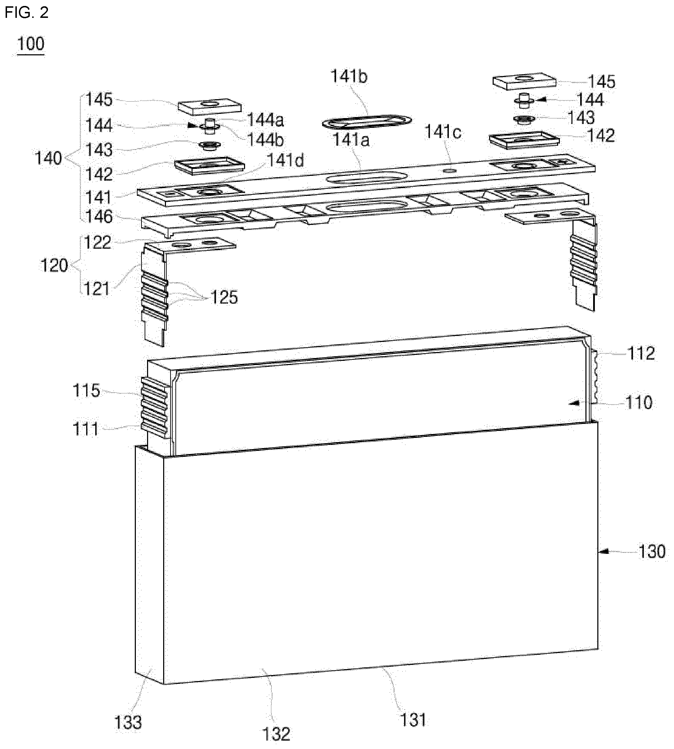

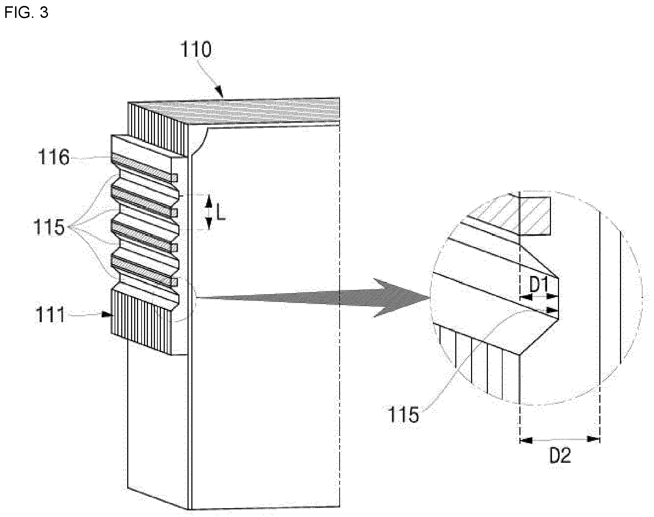

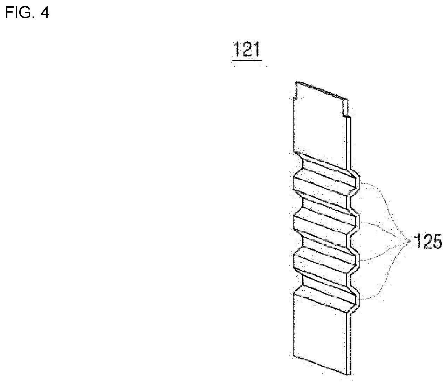

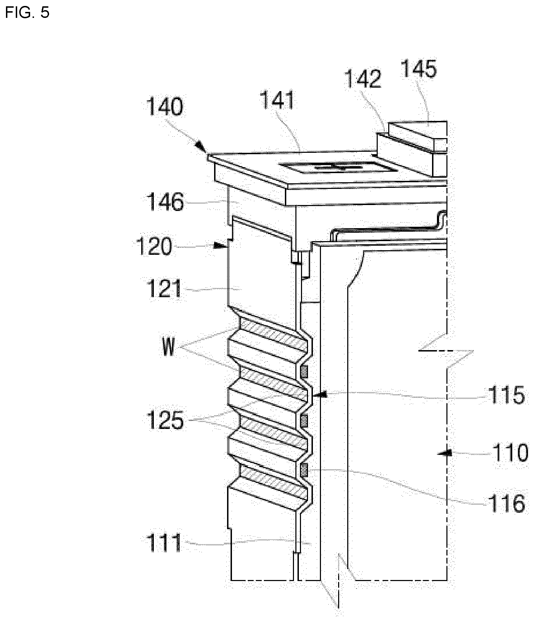

FIG. 1 is a perspective view illustrating a secondary battery according to an embodiment of the present disclosure. FIG. 2 is an exploded perspective view illustrating a secondary battery according to an embodiment of the present disclosure. FIG. 3 is a perspective view illustrating a first current collecting tab. FIG. 4 is a perspective view illustrating a current collector plate. FIG. 5 is a perspective view illustrating a state in which a first collecting tab and a current collector plate are coupled to each other.

Referring to FIGS. 1 and 2, a secondary battery 100 according to one or more embodiments of the present disclosure may include an electrode assembly 110, a current collector plate 120, a case 130, and a cap assembly 140.

The electrode assembly 110 may be formed by overlapping or piling (or stacking) a laminate of a first electrode plate, a separator, and a second electrode plate, which are formed in a thin plate shape or film shape. In some examples, the first electrode plate may serve as a positive electrode, and the second electrode plate may serve as a negative electrode. Of course, the reverse is also possible.

In some examples, the first electrode plate is formed by applying a first electrode active material, such as a transition metal oxide, to a first electrode current collector formed of a metal foil, such as aluminum or an aluminum alloy, and may include a first electrode uncoated portion that is an area to which the first electrode active material is not applied. In addition, the first electrode uncoated portion may be referred to as a first current collecting tab 111. The first current collecting tab 111 may be formed to protrude from the first electrode plate to a side. When first electrode plates are stacked, the first current collecting tab 111 may be formed to overlap at a same location, to form a multi-tab structure. In an embodiment, the first current collecting tab 111 is constructed to be integrally formed with the first electrode plates and is drawn from each of the first electrode plates, and the current collecting efficiency of the electrode assembly 110 can be increased.

In some examples, the second electrode plate is formed by applying a second electrode active material, such as graphite or carbon, to a second electrode current collector formed of a metal foil, such as copper, a copper alloy, nickel, or a nickel alloy, and may include a second electrode uncoated portion that is a region to which the second electrode active material is not applied. In addition, the second electrode uncoated portion may be referred to as a second current collecting tab 112. The second current collecting tab 112 may be formed to protrude from the second electrode plate to a side. When second electrode plates are stacked, the second current collecting tab 112 may be formed to overlap at a same location, to form a multi-tab structure. In an embodiment, the second current collecting tab 112 is constructed to be integrally formed with the second electrode plates and is drawn from each of the second electrode plates, and the current collecting efficiency of the electrode assembly 110 can be increased.

The first current collecting tab 111 may protrude to a side of the electrode assembly 110, and the second current collecting tab 112 may protrude to another, or opposite, side of the electrode assembly 110. In one or more embodiments of the present disclosure, the first current collecting tab 111 and the second current collecting tab 112 may have the same structure, and, thus, only the first current collecting tab 111 will be described below. In some examples, the first current collecting tab 111 may be referred to as a current collecting tab.

Referring to FIG. 3, the first current collecting tab 111 may protrude from a side of the first electrode plate and may be positioned above the first electrode plates. In an embodiment, the first current collecting tab 111 may not protrude from an entire side surface of the first electrode plate, but may protrude only from a portion thereof (e.g., from a top portion thereof).

In general, when a first current collecting tab protrudes to an entire side surface of a first electrode plate, the first current collecting tab may be easily deformed due to vibration or external impact applied to a secondary battery. However, in one or more embodiments of the present disclosure, since the first current collecting tab 111 protrudes only to a portion of the first electrode plate, vibration or external shock applied to the secondary battery 100 can be flexibly coped with, and consequent deformation may be prevented or substantially prevented.

In an embodiment the current collector plate 120 includes a first region 121 and a second region 122 and the second region 122 is vertically coupled to the first current collecting tab 111 or the second current collecting tab 112 of the electrode assembly 110.

In an embodiment, the first current collecting tab 111 protrudes only to a portion of the side surface of the first electrode plate, such that a top portion or a bottom portion of a first region 121 of the current collector plate 120 may be spaced apart from the first electrode plate (see FIG. 5). Here, a distance between the current collector plate 120 and the first electrode plate may correspond to a protruding length of the first current collecting tab 111. In an embodiment, welding between the first electrode plate and the current collector plate 120 is performed only at a portion where the first current collecting tab 111 is formed, and a portion of the first electrode plate in which the first current collecting tab 111 is not formed (or does not protrude) may not be interfered with by welding. Accordingly, in the present disclosure, when the electrode assembly 110 and the current collector plate 120 are welded, a region where the electrode assembly 110 (specifically, the active material applied to the separator and the electrode plate) is exposed to a welding environment (e.g., a region irradiated with a laser beam) may be reduced, thereby improving the safety of the secondary battery 100.

The first current collecting tab 111 may include coupling grooves 115 to which the current collector plate 120 is coupled and welded. The coupling grooves 115 may be formed at a same location on each of the stacked first current collecting tabs 111. In an embodiment, the coupling grooves 115 may include a plurality of trenches spaced by an interval (e.g., a predetermined interval) apart from the first current collecting tabs 111, and the trenches may extend in a stacking direction of the first current collector plates. In the figures, the number of coupling grooves 115 is shown as four, but a number of the coupling grooves 115 may be more or less than four.

In an embodiment, a depth D1 of each of the coupling grooves 115 may be about 0.8 mm to about 1.2 mm. For example, when the depth D1 of each of the coupling grooves 115 is smaller than 0.8 mm, there is a risk that welding beads W formed during welding of the first current collecting tab 111 and the current collector plate 120 (see FIG. 5) may protrude to the outside of the first region 121 of the current collector plate 120 to come into contact with the case 130. For example, when the depth D1 of each of the coupling grooves 115 is greater than 1.2 mm, the active material applied to the electrode plate may be damaged by the laser beam irradiated during welding of the first current collecting tab 111 and the current collector plate 120.

In an embodiment, the depth D1 of each of the coupling grooves 115 may be about 45% to 64% of a protruding length D2 of the first current collecting tab 111. For example, when the depth D1 of each of the coupling grooves 115 is smaller than 45% of the protruding length D2 of the first current collecting tab 111, there is a risk that the welding beads W formed during welding of the first current collecting tab 111 and the current collector plate may protrude to the outside of the first region 121 of the current collector plate 120 to come into contact with the case 130. For example, when the depth D1 of each of the coupling grooves 115 is greater than 64% of the protruding length D2 of the first current collecting tab 111, the active material applied to the electrode plate may be damaged by the laser beam irradiated during welding of the first current collecting tab 111 and the current collector plate 120.

In an embodiment, an interval L of the coupling grooves 115 may be about 10 mm or more. For example, when the interval L of the coupling grooves 115 is smaller than 10 mm, the interval between the coupling grooves 115 is too small, and, thus, welding may be difficult to perform due to laser beam interference during welding of the first current collecting tab 111 and the current collector plate 120.

In an embodiment, an adhesion member 116 may be provided (e.g., formed or applied) to the first current collecting tab 111 located between the coupling grooves 115. The adhesion member 116 may fix the first current collecting tab 111 so as not to move. In addition, the adhesion member 116 may secure erectness of the first current collecting tab 111. For example, the adhesion member 116 may be a photocurable or heat curable adhesive. In some examples, after the adhesion member 116 of a liquid type is applied to the first current collecting tab 111, it may be cured by UV or heat. In an embodiment, the adhesion member 116 may include a conductive adhesive or an insulating adhesive.

The coupling groove 115 may reduce internal resistance between the first current collecting tab 111 and the current collector plate 120 by uniformly or substantially uniformly welding the first current collecting tabs 111 having a multi-tab structure to the current collector plate 120. As such, when welding performance between the first current collecting tab 111 and the current collector plate 120 is improved, the length of the first current collecting tab 111 may be shortened, and, thus, costs may be reduced accordingly.

In some examples, the separator is positioned between the first electrode plate and the second electrode plate to prevent or substantially prevent a short circuit and enable the movement of lithium ions, and may include polyethylene, polypropylene, or a composite film of polyethylene and polypropylene. In an embodiment, the separator may be replaced with an inorganic solid electrolyte, such as a sulfide, oxide, or phosphate compound that does not require a liquid or gel electrolyte.

In some examples, the electrode assembly 110 may be accommodated in the case 130 together with an electrolyte. In some examples, the electrolyte may include a lithium salt, such as LiPF₆ or LiBF₄ in an organic solvent, such as EC, PC, DEC, EMC, or DMC. In an embodiment, the electrolyte may be in a liquid or gel state. In some examples, when an inorganic solid electrolyte is used, the electrolyte may be omitted.

The current collector plate 120 may be electrically connected to the first current collecting tab 111 and the second current collecting tab 112 of the electrode assembly 110, respectively. In some examples, the current collector plate 120 may contact the first current collecting tab 111 and the second current collecting tab 112 protruding to both sides of the electrode assembly 110, respectively, and, in this state, may be coupled to each other by welding. For example, the current collector plate 120 electrically connected to the first current collecting tab 111 may have a positive polarity, and the current collector plate 120 electrically connected to the second current collecting tab 112 may have a negative polarity.

The current collector plate 120 may include a first region 121 and a second region 122. In an embodiment, the first region 121 may be vertically coupled to the first current collecting tab 111 or the second current collecting tab 112 of the electrode assembly 110, and, in this state, may be welded to the first current collecting tab 111 or the second current collecting tab 112. The first region 121 may be positioned parallel to a short side surface 133 of the case 130. In addition, a length of the first region 121 may correspond to or exceed a length of the first current collecting tab 111. That is, in an embodiment, the first region 121 may cover only the protruding portion of the first current collecting tab 111 or the second current collecting tab 112, rather than covering an entire side surface of the electrode assembly 110 (or the first electrode plate). Therefore, in the electrode assembly 110, a portion where the first current collecting tab 111 or the second current collecting tab 112 does not protrude may directly face the short side surface 133 of the case 130 without being covered by the current collector plate 120. As such, in embodiments of the present disclosure, the length of the current collector plate 120 may be reduced, and corresponding costs can be reduced.

The second region 122 may be coupled to the first region 121 by welding, etc. at a top portion of the first region 121, but, optionally, the first region 121 and the second region 122 may be integrally provided. The second region 122 may be positioned above the electrode assembly 110 and may be arranged parallel to a cap plate 141 of the cap assembly 140. In an embodiment, the second region 122 may include a hole to which an electrode terminal 144 to be described later is coupled.

Referring to FIG. 4, the first region 121 of the current collector plate 120 may include protrusions 125 coupled to the coupling grooves 115 of the first current collecting tab 111. In an embodiment, the height of each of the protrusions 125 may correspond to the depth D1 of each of the coupling grooves 115. The protrusions 125 may protrude in a same direction as a direction in which the second region 122 extends from the first region 121 (or in a direction toward the electrode assembly 110). In an embodiment, the protrusions 125 may be formed in the form of lines spaced at regular intervals from the first region 121. A number of the protrusions 125 may correspond to the number of coupling grooves 115. The protrusions 125 of the current collector plate 120 may be welded after being coupled to the coupling grooves 115 of the first current collecting tab 111. Therefore, referring to FIG. 5, welding beads W may be formed in the protrusions 125. In an embodiment, welding may be performed only in the protrusions 125 of the first region 121. In some examples, thicknesses of the welding beads W may be smaller than the heights of the protrusions 125 or the depths of the coupling grooves 115.

As such, the protrusions 125 of the current collector plate 120 may be coupled and welded to the coupling grooves 115 of the first current collecting tab 111, and, thus, the first current collecting tabs 111 having a multi-tab structure can be uniformly or substantially uniformly welded to the current collector plate 120.

The case 130 may be formed of a conductive metal, such as aluminum, an aluminum alloy, or nickel-plated steel. In an embodiment, the case 130 may have a substantially hexahedral shape with an opening into which the electrode assembly 110 may be inserted and seated. For example, the case 130 may include a bottom surface 131, and a pair of long side surfaces 132 and a pair of short side surfaces 133 extending upward from the bottom surface 131. Here, the long side surfaces 132 may refer to surfaces having a relatively larger area than the short side surfaces 133. The cap plate 141 may be coupled to the opening of the case 130 to seal the case 130. In an embodiment, the inner surface of the case 130 is subjected to insulation treatment to prevent or substantially prevent an electrical short circuit from occurring inside. In an embodiment, an electrode of the electrode assembly 110 may be electrically connected to the case 130 through the cap plate 141. Even in this case, an electrical short circuit inside the case 130 may be prevented or substantially prevented by the insulation treatment inside the case 130. For example, the case 130 may act as a positive electrode.

The cap assembly 140 may be coupled to the case 130 to seal the case 130. In some examples, the cap assembly 140 may include the cap plate 141, coupling members 142, gaskets 143, electrode terminals 144, terminal plates 145, and insulation members 146.

The cap plate 141 may be coupled to the case 130. The cap plate 141 may seal the opening of the case 130 and may be formed of a same material as the case 130. In some examples, the cap plate 141 may be coupled to the case 130 by laser welding. In an embodiment, the cap plate 141 may be electrically independent or electrically connected to either the first current collecting tab 111 or the second current collecting tab 112. For example, the cap plate 141 may be electrically connected to the first current collecting tab 111, and the cap plate 141 and the case 130 may have a same polarity (e.g., a positive polarity). Of course, the cap plate 141 may also be electrically connected to the second current collecting tab 112.

In an embodiment, a vent hole 141a may be formed at approximately a center of the cap plate 141, and a safety vent 141b may be formed inside the vent hole 141a to have a relatively small thickness compared to other regions. When the internal pressure of the case 130 is higher than a set rupture pressure, the safety vent 141b may be ruptured, thereby preventing or substantially preventing the secondary battery 100 according to an embodiment of the present disclosure from exploding. In an embodiment, an electrolyte injection hole 141c for injecting electrolyte may be formed at a side of the cap plate 141. The electrolyte may be injected into the case 130 through the electrolyte injection hole 141c, and then the electrolyte injection hole 141c may be sealed by a plug (not shown). In an embodiment, terminal holes 141d through which the electrode terminals 144 pass are formed on both sides of the cap plate 141, and the gaskets 143 and the electrode terminals 144 may be coupled to the terminal holes 141d, respectively.

The coupling members 142 may be provided as a pair and coupled to both sides of the upper surface of the cap plate 141, respectively. The coupling members 142 may be located in concave areas formed on the upper surface of the cap plate 141. In an embodiment, the coupling members 142 may accommodate the gaskets 143 and the electrode terminals 144 through the terminal holes 141d formed therein. In some examples, the coupling member 142 coupled to the electrode terminal 144 electrically connected to the first current collecting tab 111 may electrically connect the electrode terminal 144 and the cap plate 141, and the coupling member 142 coupled to the electrode terminal 144 electrically connected to the second current collecting tab 112 may insulate the electrode terminal 144 and the cap plate 141 from each other.

The gaskets 143 may be made of an insulating material and may be coupled to top portions of the coupling members 142 to seal regions between the electrode terminals 144 and the coupling members 142 (or the cap plate 141). The gaskets 143 may prevent or substantially prevent external moisture from penetrating into the secondary battery 100 or may prevent or substantially prevent the electrolyte contained in the secondary battery 100 from leaking to the outside.

The electrode terminals 144 may penetrate the terminal holes 141d of the cap plate 141 to then be coupled to the cap plate 141. The gaskets 143 may be interposed between the electrode terminals 144 and the terminal holes 141d. In an embodiment, each of the electrode terminals 144 may include a columnar body portion 144a and a flange portion 144b located at a height of approximately the center of the body portion 144a and extending in a lateral direction (or a horizontal direction). A lower portion of the body portion 144a may be coupled to the second region 122 of the current collector plate 120, and an upper portion of the body portion 144a may penetrate the cap plate 141 and protrude toward a top portion of the cap plate 141. In some examples, the electrode terminal 144 electrically connected to the current collector plate 120 to which the first current collecting tab 111 is welded has a positive polarity, and the electrode terminal 144 electrically connected to the current collector plate 120 to which the second current collecting tab 112 is welded has a negative polarity.

The terminal plates 145 may be coupled to the electrode terminals 144 protruding upward from the cap plate 141, respectively. In some examples, the electrode terminals 144 may be fixed to the terminal plates 145 by riveting and/or welding the top portions of the electrode terminals 144 after the terminal plates 145 are coupled to the top portions of the electrode terminals 144.

The insulation members 146 are formed under the cap plate 141 to prevent or substantially prevent a short circuit between the current collector plate 120 (or the second region 122) and the cap plate 141.

As described above, in the secondary battery according to embodiments of the present disclosure, by providing a current collecting tab having coupling grooves and a current collector plate having protrusions coupled to the coupling grooves and vertically coupled to the current collecting tab, welding between the current collecting tab and the current collector plate can be made uniform or substantially uniform.

In addition, in the secondary battery according to embodiments of the present disclosure, the current collecting tab is formed only on a portion of a side surface of the electrode plate, and deformation of the current collecting tab due to vibration and external shock can be prevented or substantially prevented, costs can be reduced, and an effect on the electrode plate during welding can be minimized or reduced.

While one or more embodiments of the secondary battery according to the present disclosure have been described herein, the present disclosure is not limited thereto, and it will be understood by a person skilled in the art that various changes in form and details may be made therein without departing from the spirit and scope of the present disclosure as set forth in the following claims.

### List of reference signs

- 100: Secondary battery
- 110: Electrode assembly
- 111: First current collecting tab
- 112: Second current collecting tab
- 115: Coupling groove
- 116: Adhesion member
- 120: Current collector plate
- 121: First region
- 122: Second region
- 125: Protrusions
- 130: Case
- 131: Bottom surface
- 132: Long side surfaces
- 133: Short side surface
- 140: Cap assembly
- 141: Cap plate
- 141a: Vent hole
- 141b: Safety vent
- 141c: Electrolyte injection hole
- 141d: Terminal holes
- 142: Coupling member
- 143: Gaskets
- 144: Electrode terminal
- 144a: Body portion
- 144b: Flange portion
- 145: Terminal plates
- 146: Insulation members
- W: Welding beads
- L: Interval
- D1: Depth
- D2: Protruding length

## Claims

1. A secondary battery (100) comprising:
an electrode assembly (110) comprising a first electrode plate from which a first current collecting tab (111) protrudes, a second electrode plate from which a second current collecting tab (112) protrudes, and a separator between the first electrode plate and the second electrode plate;
a case (130) accommodating the electrode assembly (110); and
a current collector plate (120) electrically connected to the first current collecting tab (111) and comprising protrusions (125),
wherein the first current collecting tab (111) is vertically coupled to the current collector plate (120) and comprises coupling grooves (115) to which the protrusions (125) are coupled.

2. The secondary battery (100) as claimed in claim 1, wherein the current collector plate (120) includes a first region (121) and a second region (122) and the second region (122) is vertically coupled to the first current collecting tab (111) or the second current collecting tab (112) of the electrode assembly (110).

3. The secondary battery (100) as claimed in claim 1 or 2, wherein the first current collecting tab (111) protrudes only to a portion of the side surface of the first electrode plate, such that a top portion or a bottom portion of a first region (121) of the current collector plate (120) is spaced apart from the first electrode plate.

4. The secondary battery (100) as claimed in claim 1 or 2, wherein the second current collecting tab (112) protrudes only to a portion of the side surface of the second electrode plate, such that a top portion or a bottom portion of a first region (121) of the current collector plate (120) is spaced apart from the second electrode plate.

5. The secondary battery (100) as claimed in any of claims 1 to 4, wherein the coupling grooves (115) comprise a plurality of trenches spaced apart from each other.

6. The secondary battery (100) as claimed in any of claims 1 to 5, further comprising an adhesion member (116) between the coupling grooves (115) and fixing the first current collecting tab (111).

7. The secondary battery (100) as claimed in any of claims 1 to 6, wherein welding beads (W) are formed in the protrusions (125) by welding the first current collecting tab (111) and the current collector plate (120).

8. The secondary battery (100) as claimed in any of claims 1 to 7, wherein the coupling grooves (115) have a depth (D1) of 0.8 mm to 1.2 mm.

9. The secondary battery (100) as claimed in any of claims 1 to 8, wherein a depth (D1) of each of the coupling grooves (115) is 45% to 64% of a protruding length (D2) of the first current collecting tab (111) from the first electrode plate.

10. The secondary battery (100) as claimed in any of claims 1 to 9, wherein an interval (L) between the coupling grooves (115) is 10 mm or more.

11. The secondary battery (100) as claimed in any of claims 1 to 10, wherein the current collector plate (120) is arranged parallel to a short side surface (133) of the case (130), and the protrusions (125) protrude in a direction toward the electrode assembly (110).

12. The secondary battery (100) as claimed in any of claims 1 to 11, wherein the first current collecting tab (111) is arranged only on a portion of a side surface of the first electrode plate and is covered by the current collector plate (120), and a portion of the first electrode plate on which the first current collecting tab (111) is not arranged is exposed from the current collector plate (120) and faces the short side surface (133) of the case (130).

13. The secondary battery (100) as claimed in any of claims 1 to 12, wherein a separation space is located between the current collector plate (120) and the first electrode plate.
